(19) Europäisches Patentamt / European Patent Office / Office européen des brevets

(11) **EP 4 734 189 A1**

(12) **EUROPEAN PATENT APPLICATION**

(43) Date of publication:
**29.04.2026 Bulletin 2026/18**

(21) Application number: **25207639.3**

(22) Date of filing: **09.10.2025**

(51) International Patent Classification (IPC):
*H01M 4/66* (2006.01)       *H01M 10/052* (2010.01)
*H01M 50/533* (2021.01)       *H01M 50/536* (2021.01)
*H01M 10/04* (2006.01)

(52) Cooperative Patent Classification (CPC):
H01M 10/052; H01M 4/661; H01M 4/667;
H01M 10/0418; H01M 10/044; H01M 50/533;
H01M 50/536

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.10.2024 KR 20240144539**

(71) Applicant: **SAMSUNG SDI CO., LTD.**
**Yongin-si, Gyeonggi-do 17084 (KR)**

(72) Inventors:
• **KIM, Hyunwoo**
  **17084 Yongin-si, Gyeonggi-do (KR)**
• **LEE, Wonhyung**
  **17084 Yongin-si, Gyeonggi-do (KR)**

(74) Representative: **Michalski Hüttermann & Partner Patentanwälte mbB**
**Kaistraße 16A**
**40221 Düsseldorf (DE)**

(54) **COMPOSITE SUBSTRATE FOR RECHARGEABLE LITHIUM BATTERY AND RECHARGEABLE LITHIUM BATTERY INCLUDING THE SAME**

(57)    Disclosed are composite substrates and rechargeable lithium batteries. The composite substrate includes a first metal layer, a second metal layer, and a function enhancement layer between the first metal layer and the second metal layer. The function enhancement layer includes a tab portion and a middle portion. The tab portion is on at least one end in a first direction of the function enhancement layer. The tab portion extends substantially parallel to a third direction. The middle portion is a remaining part of the function enhancement layer except for the tab portion. A welding adhesion of the tab portion is greater than a welding adhesion of the middle portion. An elongation at break of the middle portion is greater than an elongation at break of the tab portion.

FIG. 7

EP 4 734 189 A1

**Description**

CROSS-REFERENCE TO RELATED APPLICATION

This application claims priority to Korean Patent Application No. 10-2024-0144539 filed on October 22, 2024 in the Korean Intellectual Property Office.

BACKGROUND

The present disclosure relates to a composite substrate for a rechargeable lithium battery, and a rechargeable lithium battery including the composite substrate.

Recently, with increasing presence of battery-using electronic devices, such as, e.g., mobile phones, laptop computers, electric vehicles, and the like, there is increasing demand for rechargeable batteries with high energy density and high capacity. Therefore, improving performance of rechargeable lithium batteries may be advantageous.

A rechargeable lithium battery typically includes a positive electrode, a negative electrode, and an electrolyte, the positive and negative electrodes include an active material in which intercalation and deintercalation are possible, and the rechargeable lithium battery generates electrical energy caused by oxidation and reduction reactions when lithium ions are intercalated and deintercalated.

SUMMARY

An example embodiment of the present disclosure includes a welding-friendly composite substrate with desired or improved impact resistance for a rechargeable lithium battery.

An example embodiment of the present disclosure includes a battery including the composite substrate for a rechargeable lithium battery.

According to an example embodiment of the present disclosure, a composite substrate for a rechargeable lithium battery may include a first metal layer, a second metal layer, and a function enhancement layer between the first metal layer and the second metal layer. The function enhancement layer may include a tab portion and a middle portion. The tab portion may be on at least one end of the function enhancement layer in a first direction. The tab portion may extend substantially parallel to a third direction. The middle portion may be or include a remaining part of the function enhancement layer except for the tab portion. A welding adhesion of the tab portion may be greater than a welding adhesion of the middle portion. An elongation at break of the middle portion may be greater than an elongation at break of the tab portion.

According to an example embodiment of the present disclosure, a rechargeable lithium battery may include a positive electrode; a negative electrode; and an electrolyte. The positive electrode may include the composite substrate as discussed above; a tab electrically connected to the composite substrate; and a positive electrode active material layer on the composite substrate. A tab portion of a function enhancement layer in the composite substrate may vertically overlap the tab. A middle portion of the function enhancement layer in the composite substrate may vertically overlap the positive electrode active material layer.

According to an example embodiment of the present disclosure, a method of fabricating a rechargeable lithium battery may include forming a function enhancement layer by side-by-side combining a first film including a first material and a second film including a second material; forming a composite substrate by correspondingly forming a first metal layer and a second metal layer on opposite surfaces of the function enhancement layer, wherein the composite substrate includes a mixture portion including the first film and an uncoated portion including the second film; forming an active material layer on the mixture portion of the composite substrate; and attaching on the uncoated portion of the composite substrate a tab electrically connected to at least one of the first metal layer and the second metal layer.

BRIEF DESCRIPTION OF DRAWINGS

FIG. 1 is a simplified conceptual diagram illustrating a rechargeable lithium battery according to an example embodiment of the present disclosure.

FIGS. 2 to 5 are simplified diagrams illustrating a rechargeable lithium battery according to an example embodiment of the present disclosure, with FIG. 2 illustrating a cylindrical battery, FIG. 3 illustrating a prismatic battery, and FIGS. 4 and 5 illustrating pouch-type batteries.

FIG. 6 is a cross-sectional view illustrating a rechargeable lithium battery according to an example embodiment of the present disclosure.

FIG. 7 is an enlarged view illustrating a portion of FIG. 6.

FIGS. 8 and 9 are diagrams illustrating an example in which a tab portion is positioned on opposite ends of a function enhancement layer.

FIG. 10 is a perspective view of FIG. 9.

FIG. 11 is a diagram illustrating a comparative example in which a function enhancement layer is composed only of a middle portion.

FIG. 12 is a flow chart illustrating a method of fabricating a rechargeable lithium battery according to an example of the present disclosure.

## DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter ($D_{50}$) value may be obtained through a calculation. A laser scattering method may also be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

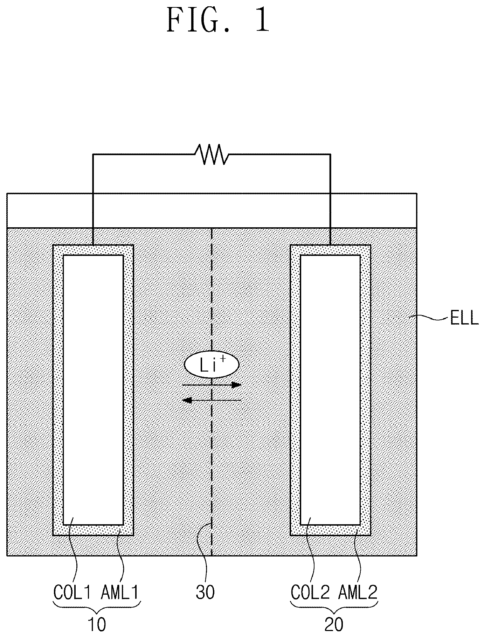

FIG. 1 is a simplified conceptual diagram illustrating a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode

The positive electrode 10 for the rechargeable lithium battery may include a current collector COL1 and a positive electrode active material layer AML1 formed on the current collector COL1. The positive electrode active material layer AML1 may include a positive electrode active material, and may further include a binder and/or a conductive material.

An amount of the positive electrode active material in the positive electrode active material layer AML1 may range from about 90 wt% to about 99.5 wt% relative to 100 wt% of the positive electrode active material layer AML1. Amounts of the binder and the conductive material may each be in a range of about 0.5 wt% to about 5 wt% relative to 100 wt% of the positive electrode active material layer AML1.

The binder may be configured to improve attachment of positive electrode active material particles to each other, and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, ketjen black, carbon fiber, carbon nano-fiber, and carbon nano-tube; a metal-based material in the form of a metal powder or metal fiber including one or more of copper, nickel, aluminum, and silver; a conductive polymer such as a polyphenylene derivative; or a mixture thereof.

Aluminum (Al) may be included as the current collector COL1, but the present disclosure is not limited thereto.

## Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and any combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or any combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-6-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-6-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_dO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the chemical formulae above, A may be or include at least one of Ni, Co, Mn, or any combination thereof, X may be or include at least one of Al, Ni, Co, Mn, Cr, Fe, Mg, Sr, V, a rare-earth element, or any combination thereof, D may be or include at least one of O, F, S, P, or any combination thereof, G may be or include at least one of Al, Cr, Mn, Fe, Mg, La, Ce, Sr, V, or any combination thereof, and $L^1$ may be or include at least one of Mn, Al, or any combination thereof.

For example, the positive electrode active material may be or include a high-nickel-based positive electrode active material having a nickel amount that is equal to or greater than about 80 mol%, 85 mol%, 90 mol%, 91 mol%, or 94 mol% and equal to or less than about 99 mol% relative to 100 mol% of metal devoid of lithium in the lithium transition metal composite oxide. The high-nickel-based positive electrode active material may achieve high capacity, and thus may be applied to a high-capacity and high-density rechargeable lithium battery.

## Negative Electrode

The negative electrode 20 for the rechargeable lithium battery may include a current collector COL2, and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a content in a range of about 90 wt% to about 99 wt%, a binder in a content in a range of about 0.5 wt% to about 5 wt%, and a conductive material in a content in a range of about 0 wt% to about 5 wt%.

The binder may be configured to improve attachment of negative electrode active material particles to each other, and to improve attachment of the negative electrode active material to the current collector COL2. The binder may include a at least one of non-aqueous binder, an aqueous binder, a dry binder, or any combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or any combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or any combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or any combination thereof.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, ketjen black, carbon fiber, carbon nano-fiber, and carbon nano-tube; a metal-based material in the form of a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or any combination thereof.

Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or a transition metal oxide.

The material that can reversibly intercalate and deintercalate lithium ions may include a carbon-based negative electrode active material, for example, at least one of crystalline carbon, amorphous carbon, or any combination thereof. For example, the crystalline carbon may include graphite such as at least one of non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, $SiO_x$ (where 0<x<2), Si-Q alloy (where Q is or includes at least one of alkali metal, alkaline earth metal, Group 13 element, Group 14 element (except for Si), Group 15 element, Group 16 element, transition metal, a rare-earth element, or any combination thereof), or any combination thereof. The Sn-based negative electrode active material may include at least one of Sn, $SnO_2$, a Sn-based alloy, any combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer on a surface of the core.

The Si-based negative electrode active material or the Sn-based negative electrode active material may be included in combination with a carbon-based negative electrode active material.

## Separator

Based on a type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate, and a coating layer positioned on one or opposite surfaces of the porous substrate, which coating layer includes at least one of an organic material, an inorganic material, or any combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon™, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or any combination thereof, but the present disclosure is not limited thereto.

The organic material and the inorganic material may be mixed in one coating layer, or may be present as a stack of a coating layer including the organic material and a coating layer including an inorganic material.

## Electrolyte

The electrolyte ELL for the rechargeable lithium battery may include a non-aqueous organic solvent and a lithium salt.

The non-aqueous organic solvent may be configured as a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or any combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol, and the aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be included alone or in a mixture of two or more solvents.

In addition, when a carbonate-based solvent is included, a cyclic carbonate and a linear carbonate may be mixed, and the cyclic carbonate and the linear carbonate may be mixed in a volume ratio of about 1:1 to about 1:9.

The lithium salt may be or include a material that dissolves in the non-aqueous organic solvent to constitute a supply source of lithium ions in a battery, and is configured to enable a basic operation of a rechargeable lithium battery and to promote the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

Rechargeable Lithium Battery

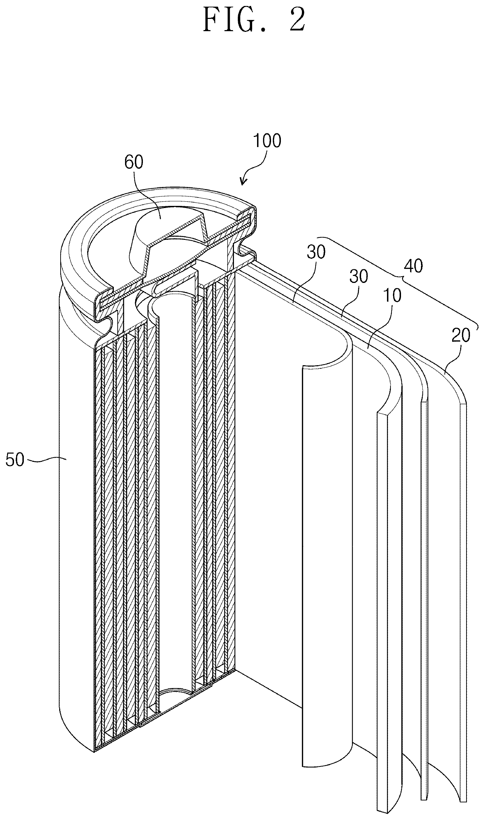

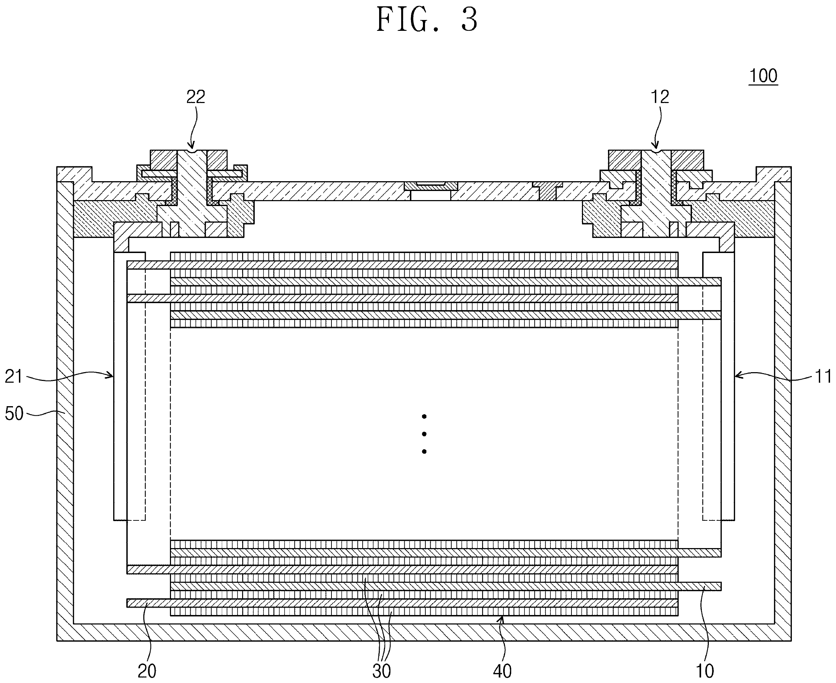

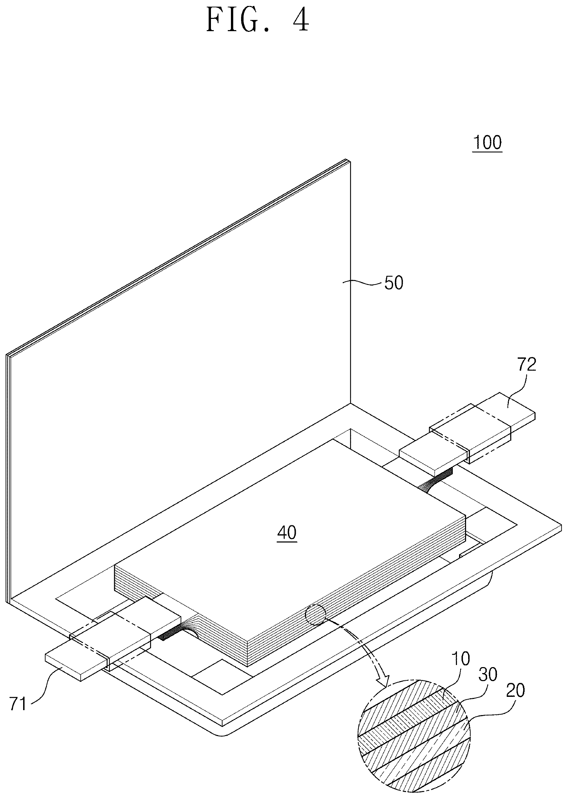

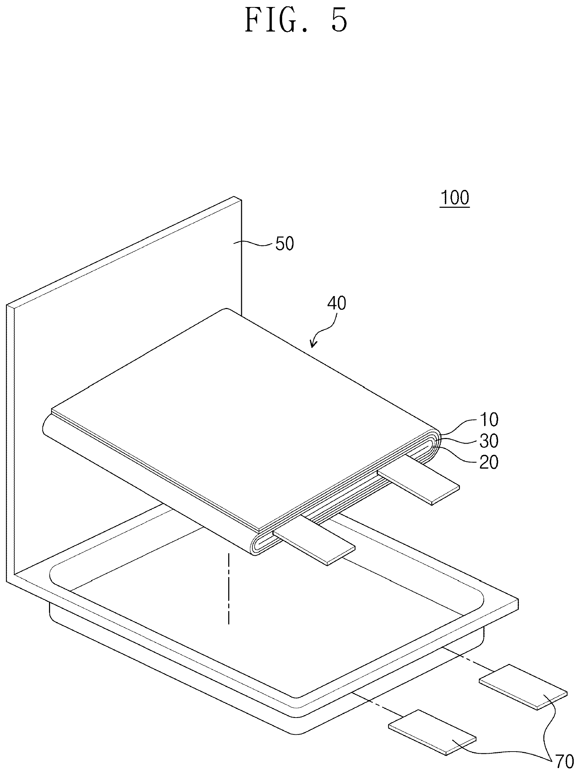

Based on a shape of a rechargeable lithium battery, the rechargeable lithium battery may be classified into cylindrical, prismatic, pouch, and coin types. FIGS. 2 to 5 are simplified diagrams illustrating a rechargeable lithium battery according to an example embodiment of the present disclosure, with FIG. 2 illustrating a cylindrical battery, FIG. 3 illustrating a prismatic battery, and FIGS. 4 and 5 illustrating pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

The following describes in detail some example embodiments of the present disclosure. In the example embodiment that follows, a detailed description of technical features repetitive to those discussed above with reference to FIGS. 1 to 5 is omitted, and a difference thereof is discussed in detail.

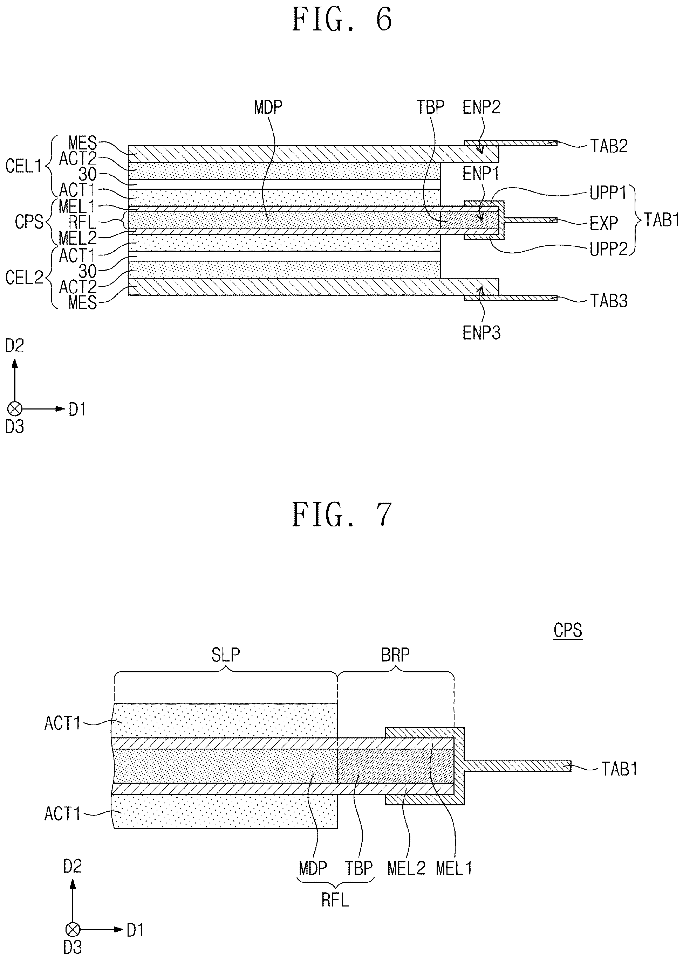

FIG. 6 illustrates a cross-sectional view illustrating a rechargeable lithium battery according to an example embodiment of the present disclosure. Referring to FIG. 6, a single bi-cell may include a composite substrate CPS, a first battery cell CEL1 on one surface of the composite substrate CPS, and a second battery cell CEL2 on another surface of the composite substrate CPS.

A single bi-cell may be constituted by the first battery cell CEL1, the second battery cell CEL2, and the composite substrate CPS of FIG. 6. The first battery cell CEL1, the second battery cell CEL2, and the composite substrate CPS of FIG. 6 may constitute the electrode assembly 40 discussed above with reference to FIGS. 2 to 5.

Each of, or at least one of, the first battery cell CEL1 and the second battery cell CEL2 may include a first active material layer ACT1, a separator 30, a second active material layer ACT2, and a metal substrate MES. The first active material layer ACT1 may be provided on the composite substrate CPS. The second active material layer ACT2 may be spaced apart from the first active material layer ACT1 across the separator 30. The metal substrate MES may be provided on the second active material layer ACT2.

The first active material layer ACT1 may be one of the positive electrode active material layer AML1 and the negative electrode active material layer AML2 that are discussed above with reference to FIG. 1. The second active material layer ACT2 may be the other of the positive electrode active material layer AML1 and the negative electrode active material layer AML2 that are discussed above with reference to FIG. 1. In an example embodiment of the present disclosure, the first active material layer ACT1 may be or include the positive electrode active material layer AML1, and the second active material layer ACT2 may be or include the negative electrode active material layer AML2. The metal substrate MES may be or include the current collector COL1 or COL2 discussed above with reference to FIG. 1, or the composite substrate CPS according to the present disclosure.

The composite substrate CPS may have a first end portion ENP1 at one end thereof. The metal substrate MES of the first battery cell CEL1 may include a second end portion ENP2 at one end thereof. The metal substrate MES of the second battery cell CEL2 may include a third end portion ENP3 at one end thereof.

A first tab TAB1 may be provided on the first end portion ENP1 of the composite substrate CPS. The first tab TAB1 may include a first connection portion UPP1, a second connection portion UPP2, and an extension portion EXP. The first connection portion UPP1 may be in contact with the first metal layer MEL1 of the composite substrate CPS. The second connection portion UPP2 may be in contact with the second metal layer MEL2 of the composite substrate CPS. The extension portion EXP may connect the first connection portion UPP1 and the second connection portion UPP2 to each other. The extension portion EXP may substantially horizontally extend in a first direction D1 from the first end portion ENP1.

The first tab TAB1 may electrically connect to each other the first metal layer MEL1 and the second metal layer MEL2 of the composite substrate CPS. The first tab TAB1 may be configured to transmit an applied voltage in common to the first metal layer MEL1 and to the second metal layer MEL2 of the composite substrate CPS.

A second tab TAB2 may be provided on the second end portion ENP2 of the metal substrate MES. The second tab TAB2 may be configured to transmit an applied voltage to the metal substrate MES of the first battery cell CEL1. A third tab TAB3 may be provided on the third end portion ENP3 of the metal substrate MES. The third tab TAB3 may be configured to transmit an applied voltage to the metal substrate MES of the second battery cell CEL2.

In examples, when the composite substrate CPS according to the present disclosure is used as the metal substrate MES, the tab TAB2 and/or TAB3 that are configured to apply a voltage to the corresponding metal substrate MES may have a shape that is similar to or the same as the shape of the first tab TAB1. For example, the tab TAB2 and/or TAB3 may include a first connection portion UPP1, a second connection portion UPP2, and an extension portion EXP.

The first tab TAB1 may constitute one of the positive and negative electrode tabs (or positive and negative electrode lead tabs) discussed above with reference to FIGS. 2 to 5. The second and third tabs TAB2 and TAB3 may constitute the other of the positive and negative electrode tabs (or positive and negative electrode lead tabs) discussed above with reference to FIGS. 2 to 5.

FIG. 7 is an enlarged view illustrating a portion of FIG. 6. Referring to FIG. 7, the composite substrate CPS may include a first metal layer MEL1, a second metal layer MEL2, and a function enhancement layer RFL interposed between the first metal layer MEL1 and the second metal layer MEL2. The first metal layer MEL1 of the composite substrate CPS may be in contact with the first active material layer ACT1 of the first battery cell CEL1. The second metal layer MEL2 of the composite substrate CPS may be in contact with the first active material layer ACT1 of the second battery cell CEL2. Each of the first and second metal layers MEL1 and MEL2 of the composite substrate CPS may correspond to the current collector COL1 or COL2 discussed above with reference to FIG. 1.

The function enhancement layer RFL may include a tab portion TBP and a middle portion MDP. The tab portion TBP may be positioned on at least one end in the first direction D 1 of the function enhancement layer RFL. For example, the tab portion TBP may be positioned on one end, or at opposite ends, of the function enhancement layer RFL. An example where the tab portion TBP is positioned on opposite ends of the function enhancement layer RFL is discussed below. The tab portion TBP may extend substantially parallel to a third direction D3. The middle portion MDP may be a remaining part of the function enhancement layer RFL except for the tab portion TBP.

The tab portion TBP may include at least one of acrylonitrile-butadiene-styrene copolymer (ABS), polyphenylene oxide (PPO), polystyrene (PS), copper, copper alloy, aluminum, aluminum alloy, and any combination thereof.

In an example embodiment, the tab portion TBP may include at least one of acrylonitrile-butadiene-styrene copolymer (ABS), polyphenylene oxide (PPO), polystyrene (PS), and any combination thereof, and at least one of acrylonitrile-butadiene-styrene copolymer (ABS), polyphenylene oxide (PPO), polystyrene (PS), and any combination thereof included in the tab portion TBP may be present in a weight ratio in a range of about 10 wt% to about 90 wt%, about 30 wt% to about 90 wt%, or about 50 wt% to about 90 wt% relative to the total weight of the tab portion TBP.

The middle portion MDP may include at least one of polypropylene (PP), polyimide (PI), polyethylene (PE), polyetherimide (PEI), polysulfone (PSU), polyester (PET), and any combination thereof.

The tab portion TBP may have a hardness that is greater than the hardness of the middle portion MDP. A Shore D hardness of the tab portion TBP may range from about 70 to about 100, from about 70 to about 90, or from about 70 to about 80. A Shore D hardness of the middle portion MDP may be less than about 70.

The Shore D hardness may be measured with a Shore D durometer. The Shore D durometer may be a hardness tester that includes a spring and an indenter therein. The indenter may have a pointed conical shape with a cone angle of about 30 degrees. The Shore D durometer may apply pressure to a surface of a polymer, and measure the degree of surface deformation. The smaller the degree of deformation after pressurization, the higher the hardness value. The indenter may vertically contact the tab portion TBP during measurement. A value of the Shore D hardness may be an average of five repeated measurements under the same conditions.

The tab portion TBP may have a high hardness and an improved impact resistance, which may lead to high welding-friendly characteristics. For example, the composite substrate CPS may not be torn, or may be less susceptible to being torn, when the tab TAB1 is welded. Any suitable welding method may be included without restriction, as long as the welding method allows for electrical connection between the composite substrate CPS and a tab. For example, resistance welding, ultrasonic welding, or laser welding may be included.

The tab portion TBP may have a robust welding adhesion. The tab portion TBP may exhibit behavior that is similar to the behavior of metal during welding. The tab portion TBP may melt or exhibit fluidity during welding, and may achieve a strong adhesive force at a junction with the tab TAB 1.

The welding adhesion may refer to bond strength between the tab portion TBP and the tab TAB1 when the tab portion TBP and the tab TAB1 are welded together. The tab portion TBP to which the tab TAB1 is welded may be prepared to measure the welding adhesion. A measurement target may be cut to a size of 100 mm x 200 mm to prepare a specimen. A universal test machine (UTM) may be used at room temperature based on ASTM D-638 to measure tensile strength. In this case, a cross-head speed of the universal test machine may be set to 300 mm/min and a gauge length may be set to 10 mm. The tensile strength may be calculated as 10 P/W·t, where P is stress (gf) at fracture, W is a specimen width (mm), and t is a specimen thickness (mm).

For example, when a welding adhesion is evaluated after the tab TAB1 is welded to the tab portion TBP, the welding adhesion may be equal to or greater than about 5.3 gf/mm$^2$ or 6.02 gf/mm$^2$.

An elongation at break of the middle portion MDP may be greater than the elongation at break of the tab portion TBP. The elongation at break of the middle portion MDP may range from about 100% to about 200%, or from about 110% to about 140%. An elongation at break of the tab portion TBP may be equal to or less than about 140% or 110%.

An elongation at break may be a percentage that represents the degree of stretch of a measurement target before fracture. A measurement target may be cut to a size of 15 mm $\times$ 80 mm to prepare a specimen. An initial length of the specimen may be measured. The specimen may be pulled at a tensile speed of 100 mm/min unit the specimen is torn. After the specimen is torn, a total length of fragments may be summed to measure a final length. An elongation at break may be calculated according to Equation 1 below.

Equation 1:

$$\text{Elongation at break (\%)} = \{(\text{final length} - \text{initial length})/\text{initial length}\} \times 100$$

The middle portion MDP may have a high elongation at break to flexibly cope with deformation and to absorb impact. For example, a battery may readily adapt to changes in external conditions during an operation thereof, and may maintain stable performance even in high and low temperature environments.

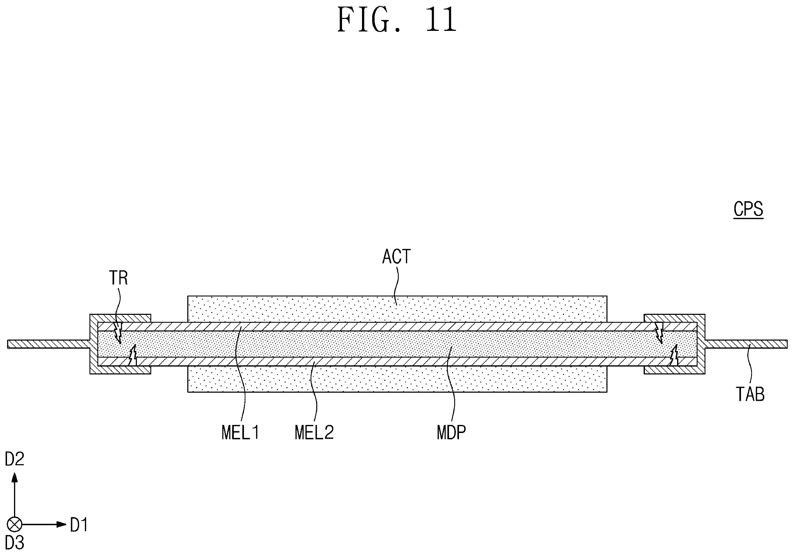

FIG. 11 is a diagram illustrating a comparative example in which the function enhancement layer RFL is composed only of the middle portion MDP. Referring to FIG. 11, the middle portion MDP may have a desired or improved impact resistance, but may be readily torn during welding. Therefore, when the function enhancement layer RFL is composed only of the middle portion MDP, an external force applied during welding of a tab TAB may cause tearing of the composite substrate CPS. In the composite substrate CPS according to the present disclosure, as the tab portion TBP is included on at least one end of the function enhancement layer RFL in the first direction D1, it may be possible to secure all of impact resistance and welding-friendly characteristics. Therefore, improved or maximum stability may be achieved in electrical and mechanical connection between the tab TAB and the composite substrate CPS.

Referring back to FIG. 7, the tab portion TBP may vertically overlap the tab TAB1. The middle portion MDP may vertically overlap the first active material layer ACT 1 on the composite substrate CPS. For example, the middle portion MDP of the function enhancement layer RFL may be included in a mixture portion SLP of the composite substrate CPS, and the tab portion TBP of the function enhancement layer RFL may be included in an uncoated portion BRP of the composite substrate CPS. The mixture portion SLP may be a section of the composite substrate CPS, and an electrode active material ACT1 may be positioned on a top surface of the section of the composite substrate CPS. The uncoated portion BRP may be a remaining section of the composite substrate CPS except for the mixture portion SLP.

Each of the first and second metal layers MEL1 and MEL2 may include at least one of aluminum, aluminum alloy, copper, copper alloy, nickel, nickel alloy, titanium, titanium alloy, iron, iron alloy, silver, and silver alloy.

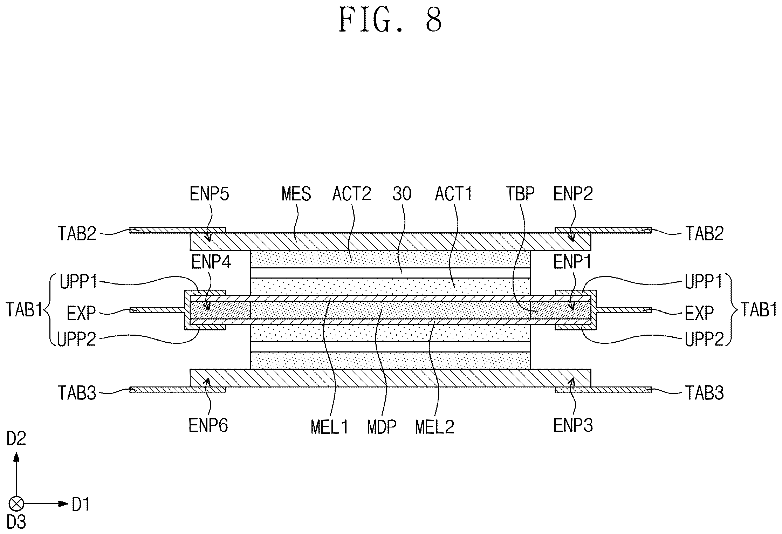

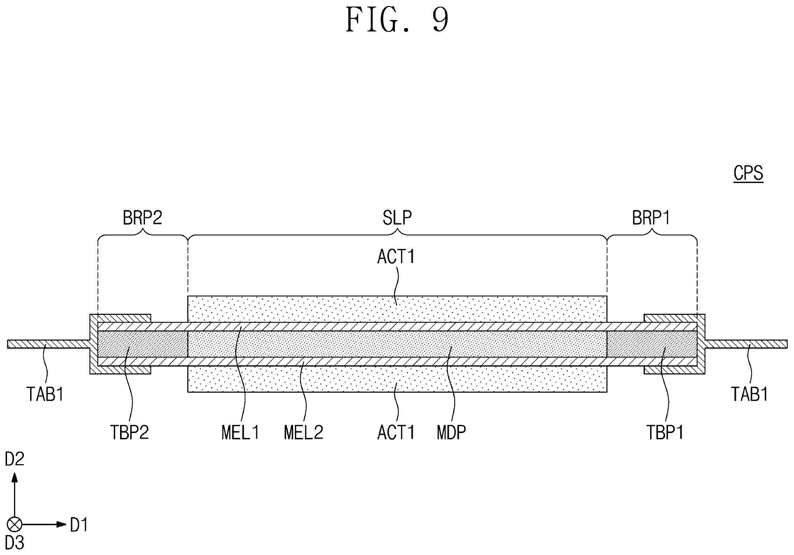

FIGS. 8 and 9 are diagrams illustrating an example in which the tab portion TBP is present on opposite ends of the function enhancement layer RFL in the first direction D1. In the example embodiment that follows, a detailed description of technical features repetitive to the technical features of the composite substrate CPS discussed above with reference to FIGS. 6 and 7 is omitted, and a difference thereof is discussed in detail.

Referring to FIGS. 8 and 9, if necessary, the tab portion TBP may be formed on opposite ends ENP1 and ENP4 in the first direction D1 of the function enhancement layer RFL. When the positive electrode tab (see 71 of FIG. 4) and the negative electrode tab (see 72 of FIG. 4) are positioned on opposite ends that face each other as shown in FIG. 4, the tab portion TBP may be formed on opposite ends of the function enhancement layer RFL.

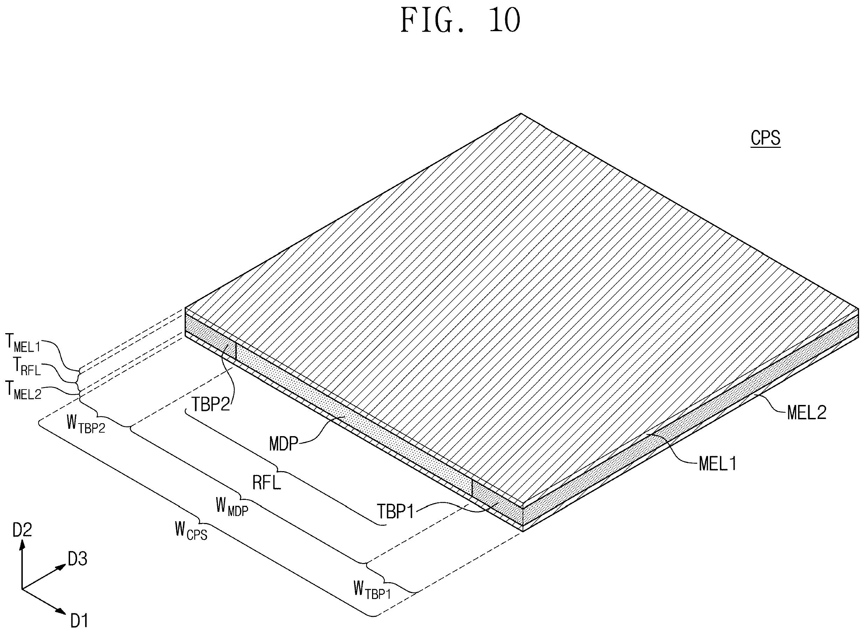

FIG. 10 illustrates a perspective view of FIG. 9. The composite substrate CPS according to the present disclosure is further discussed in detail with reference to FIG. 10.

A ratio ($W_{TBP}/W_{CPS}$) of a width $W_{TBP}$ of a tab portion TBP to a width $W_{CPS}$ of the composite substrate CPS may range from about 0.01 to about 0.1, or from about 0.03 to about 0.07. As shown in FIG. 10, when tab portions TBP1 and TBP2 are present on opposite ends in the first direction D1 of the function enhancement layer RFL, the ratio may be satisfied for each of the tab portions TBP1 and TBP2 on opposite ends. For example, the ratio $W_{TBP1}/W_{CPS}$ and the ratio $W_{TBP2}/W_{CPS}$ may each independently satisfy the range above.

When the width $W_{TBP}$ of the tab portion TBP is substantially large, the composite substrate CPS may have substantially high hardness to reduce impact resistance. When the width $W_{TBP}$ of the tab portion TBP is substantially small, the middle portion MDP may be attached during tab welding, and thus the composite substrate CPS may be torn. When the width range is satisfied according to the present disclosure, it may be possible to achieve a functional balance between impact resistance and welding-friendly characteristics.

A ratio ($T_{RFL}/T_{CPS}$) of a thickness $T_{RFL}$ of the function enhancement layer RFL to a thickness $T_{CPS}$ of the composite substrate CPS may range from about 0.5 to about 0.9 or from about 0.7 to about 0.8.

When the ratio of the thickness $T_{RFL}$ of the function enhancement layer RFL to the thickness $T_{CPS}$ of the composite substrate CPS is substantially large, the metal layers MEL1 and MEL2 may become thinner, which may reduce conductivity. When the ratio of the thickness $T_{RFL}$ of the function enhancement layer RFL to the thickness $T_{CPS}$ of the composite substrate CPS is substantially small, the composite substrate CPS may not have sufficient durability. In addition, the composite substrate CPS may not withstand an external force during welding, which may result in tearing of the composite substrate CPS.

The thickness $T_{CPS}$ of the composite substrate CPS may range from about 1 μm to about 500 μm, from about 1 μm to about 300 μm, from about 1 μm to about 100 μm, or from about 1 μm to about 30 μm.

A ratio of a weight of the tab portion TBP to a total weight of the function enhancement layer RFL may range from about 0.01 wt% to about 10 wt%. As shown in FIG. 10, when tab portions TBP1 and TBP2 are present on opposite ends in the first direction D1 of the function enhancement layer RFL, the ratio may be satisfied for each of the tab portions TBP1 and TBP2 on opposite ends.

When the weight ratio is greater than the range above, the composite substrate CPS may become substantially heavy to reduce a battery energy density. This may be because the tab portion TBP includes a material which density is greater than the density of a material included in the middle portion MDP. For example, acrylonitrile-butadiene-styrene copolymer (ABS) may have a greater density than polypropylene (PP).

A rechargeable lithium battery according to the present disclosure may include a positive electrode, an electrolyte, and a negative electrode.

The positive electrode may include a composite substrate discussed above, a tab electrically connected to the composite substrate, and a positive electrode active material on the composite substrate.

Any suitable substance may be applicable without restriction as the electrolyte, as long as the substance constitutes a medium that allows movement of ions involved in electrochemical reactions of a battery. In an example embodiment, the electrolyte may be or include a liquid electrolyte or a solid electrolyte.

In an example embodiment, the liquid electrolyte may include the electrolyte ELL discussed above with reference to FIGS. 1 to 5.

In an example embodiment, the solid electrolyte may include a sulfide-based solid electrolyte. The sulfide-based solid electrolyte may include, for example, at least one of $Li_2S$-$P_2S_5$, $Li_2S$-$P_2S_5$-LiX (where X is or includes a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

A rechargeable lithium battery according to the present disclosure may further include a separator. For example, when a liquid electrolyte is included, it may be preferable to further include a separator.

## Fabrication of Rechargeable Lithium Battery

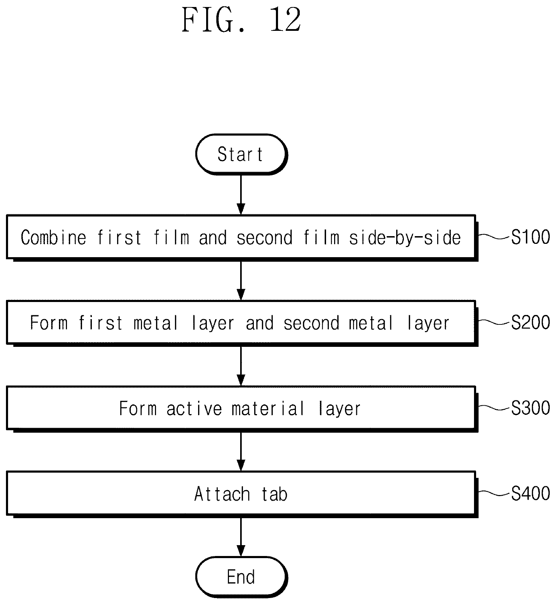

FIG. 12 is a flow chart illustrating a method of fabricating a rechargeable lithium battery according to examples of the present disclosure. Referring to FIG. 12, a method of fabricating a rechargeable lithium battery according to examples of the present disclosure may include forming a function enhancement layer by side-by-side combining a first film including a first material and a second film including a second material (S100), forming a composite substrate by correspondingly forming a first metal layer and a second metal layer on opposite surfaces of the function enhancement layer (S200), forming an active material layer on a mixture portion of the composite substrate (S300), and attaching on an uncoated portion of the composite substrate a tab electrically connected to at least one of the first and second metal layers (S400). A composite substrate may include a mixture including a first film, and an uncoated portion including a second film.

The first film including a first material and the second film including a second material may be combined side-by-side to form a function enhancement layer (S100).

The first material may include at least one of polypropylene (PP), polyimide (PI), polyethylene (PE), polyetherimide (PEI), polysulfone (PSU), polyester (PET), and any combination thereof. The first film may be or include a middle portion MDP discussed above.

The second material may include at least one of acrylonitrile-butadiene-styrene copolymer (ABS), polyphenylene oxide (PPO), polystyrene (PS), copper, copper alloy, aluminum, aluminum alloy, and any combination thereof. The second film may be or include a tab portion TBP discussed above.

A first metal layer and a second metal layer may be correspondingly formed on opposite surfaces of the function enhancement layer to form the composite substrate (S200). The formation of the metal layers may include performing physical vapor deposition (PVD), chemical vapor deposition (CVD), sputtering, spray coating, roll-to-roll coating, or any combination thereof.

An active material layer may be formed on the mixture portion of the composite substrate (S300). The formation of the active material layer may include performing at least one of a roll-to-roll, doctor blade coating, slot die coating, spray coating, electrodeposition, vacuum deposition, or any combination thereof.

On the uncoated portion of the composite substrate, a tab may be attached which is electrically connected to at least one of the first and second metal layers (S400). The attachment of the tab may include performing at least one of resistance welding, ultrasonic welding, laser welding, or any combination thereof.

The rechargeable lithium battery according to an example embodiment of the present disclosure may be applicable to automotive vehicles, mobile phones, and/or any other electrical devices, but the present disclosure is not limited thereto.

The following describes some examples and comparative examples of the present disclosure. The following embodiments, however, are merely examples, and the present disclosure is not limited to the embodiments discussed below.

## Example Embodiment 1

A first film including polyethylene (PE) was prepared. A second film including acrylonitrile-butadiene-styrene copolymer (ABS) was prepared. The first film and the second film were sequentially disposed side-by-side, and then combined to form a functional enhancement layer. An aluminum foil of 2 μm in thickness was coated on each of top and bottom surfaces of the function enhancement layer to manufacture a composite substrate.

A width of the composite was 20 cm, a thickness of the composite substrate was 14 μm, a thickness of the function enhancement layer was 10 μm, a width of a tab portion was 1 cm, and a width of a middle portion was 18 cm.

A weight of the function enhancement layer was 0.28g, and a weight of the tab portion was 0.014g (i.e., 5 wt% of the total weight of the function enhancement layer).

## Example Embodiment 2

A composite substrate was manufactured in the same method as in Example Embodiment 1, with a difference that acrylonitrile-butadiene-styrene copolymer (ABS) and aluminum powder were mixed to prepare a second film.

A weight of the function enhancement layer was 0.35g, a weight of the tab portion was 0.0245g (i.e., 7 wt% of the total weight of the function enhancement layer), and a weight of the ABS included in the tab portion was 0.01225g (i.e., 50 wt% of the weight of the tab portion).

## Example Embodiment 3

A composite substrate was manufactured in the same method as in Example Embodiment 1, with a difference that a second film including aluminum powder was prepared.

A weight of the function enhancement layer was 0.4g, and a weight of the tab portion was 0.04g (i.e., 10 wt% of the total weight of the function enhancement layer).

## Comparative Example 1

A composite substrate was manufactured in the same method as in Example Embodiment 1, with a difference that a function enhancement layer including only a first film was formed.

## Comparative Example 2

A composite substrate was manufactured in the same method as in Example Embodiment 1, with a difference that a second film including polyethylene (PE) was prepared.

## Evaluation 1: Elongation At Break

Each of the composite substrates according to the Examples and the Comparative Examples was allowed to evaluate an elongation at break of each of the tab portion and the middle portion. A method of measuring the elongation at break is as described in the detailed description of the present disclosure. The results are listed in Table 1 below.

## Evaluation 2: Welding

A tab welding was performed on the composite substrates according to the Examples and the Comparative Examples.

A tab was attached to an area vertically overlapping the tab portion. In Comparative Example 1 where no tab portion was present, a tab was attached to the same location as in Example Embodiment 1.

The tab portion was welded using ultrasonic welding with a power output of 0.5 kW to 2 kW, a welding speed of 5 mm/s, and a single pass (without multiple reciprocating movement).

After the welding, a welding adhesion was measured. A method of measuring the welding adhesion is as described in the detailed description of the present disclosure. The results are listed in Table 2 below.

Table 1:

|  | Elongation at break of middle portion (%) | Elongation at break of tab portion (%) |
|---|---|---|
| Embodiment 1 | 140 | 50 |
| Embodiment 2 | 110 | 10 |
| Embodiment 3 | 110 | 100 |

Table 2:

|  | Welding (adhesion, gf/mm$^2$) |
|---|---|
| Embodiment 1 | 11.8 |
| Embodiment 2 | 13.5 |
| Embodiment 3 | 6.02 |
| Comparative 1 | 5.3 |
| Comparative 2 | 0 ~ 0.25 |

Referring to Table 1, it may be observed that the middle portion has an desired or improved elongation at break that is superior to the elongation at break of the tab portion.

Referring to Table 2, it may be observed that the composite substrate according to the present disclosure forms a strong adhesion at a junction with the tab portion compared to the composite substrate according to the Comparative Examples.

A composite substrate for a rechargeable lithium battery according to an example embodiment of the present inventive concepts may include a function enhancement layer to have desired or improved impact resistance and to reduce tearing of the substrate during tab welding. A rechargeable lithium battery including the composite substrate may have an improved performance.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

**Claims**

1.    A composite substrate (CPS) for a rechargeable lithium battery (100), the composite substrate (CPS) comprising:

    a first metal layer (MEL1);
    a second metal layer (MEL2); and
    a function enhancement layer (RFL) between the first metal layer (MEL1) and the second metal layer (MEL2),
    wherein the function enhancement layer (RFL) comprises a tab portion (TBP) and a middle portion (MDP),
    wherein the tab portion (TBP) is on at least one end of the function enhancement layer (RFL) in a first direction (D1),
    wherein the tab portion (TPB) extends substantially parallel to a third direction (D3),
    wherein the middle portion (MDP) comprises a remaining part of the function enhancement layer (RFL) except for the tab portion (TBP),
    wherein a welding adhesion of the tab portion (TBP) is greater than a welding adhesion of the middle portion (MDP),
    wherein an elongation at break of the middle portion (MDP) is greater than an elongation at break of the tab portion (TBP).

2.    The composite substrate (CPS) of claim 1, wherein the tab portion (TBP) comprises at least one of acrylonitrile-butadiene-styrene copolymer (ABS), polyphenylene oxide (PPO), polystyrene (PS), copper, copper alloy, aluminum, aluminum alloy, and any combination thereof.

3.    The composite substrate (CPS) of any of the previous claims, wherein the middle portion (MDP) comprises at least one of polypropylene (PP), polyimide (PI), polyetherimide (PEI), polysulfone (PSU), polyethylene (PE), polyester (PET), and any combination thereof.

4.    The composite substrate (CPS) of any of the previous claims, wherein the tab portion (TBP) comprises a pair of tab portions (TBP) on opposite ends of the function enhancement layer (RFL) in the first direction (D1).

5.    The composite substrate (CPS) of any of the previous claims , wherein a ratio of a width of the tab portion (TBP) to a width of the composite substrate (CPS) is in a range of 0.01 to 0.1.

6. The composite substrate (CPS) of any of the previous claims, wherein a ratio of a thickness of the function enhancement layer (RFL) to a thickness of the composite substrate (CPS) is in a range of 0.5 to 0.9.

7. The composite substrate (CPS) of any of the previous claims, wherein a ratio of a weight of the tab portion (TBP) to a total weight of the function enhancement layer (RFL) is in a range of 0.01 wt% to 10 wt%.

8. The composite substrate (CPS) of any of the previous claims, wherein the tab portion (TBP) comprises at least one of acrylonitrile-butadiene-styrene copolymer (ABS), polyphenylene oxide (PPO), polystyrene (PS), and any combination thereof,
   wherein at least one of acrylonitrile-butadiene-styrene copolymer (ABS), polyphenylene oxide (PPO), polystyrene (PS), and any combination thereof included in the tab portion is present in a weight ratio in a range of 10 wt% to 90 wt% relative to a total weight of the tab portion.

9. The composite substrate (CPS) of any of the previous claims, wherein a thickness of the composite substrate (CPS) is in a range of 10 $\mu$m to 500 $\mu$m.

10. The composite substrate (CPS) of any of the previous claims, wherein the welding adhesion of the tab portion (TBP) is equal to or greater than 5.3 gf/mm$^2$, determined in accordance with ASTM D-638.

11. The composite substrate (CPS) of any of the previous claims, wherein the elongation at break of the middle portion (MDP) is in a range of 100% to 200%, wherein the elongation at break is determined according to Elongation at break (%) = {(final length - initial length)/initial length} $\times$ 100.

12. A rechargeable lithium battery (100), comprising:

    a positive electrode (10);
    a negative electrode (20); and
    an electrolyte,
    wherein the positive electrode (10) comprises:

       the composite substrate (CPS) as set forth in one of claims 1 to 11;
       a tab (TAB1) electrically connected to the composite substrate (CPS); and
       a positive electrode active material layer (AML1, ACT1) on the composite substrate (CPS),

    wherein a tab portion (TBP) of a function enhancement layer (RFL) in the composite substrate (CPS) vertically overlaps the tab (TAB1),
    wherein a middle portion (MDP) of the function enhancement layer (RFL) in the composite substrate (CPS) vertically overlaps the positive electrode active material layer (AML1, ACT1).

13. A method of fabricating a rechargeable lithium battery (100), the method comprising:

    forming a function enhancement layer (RFL) by side-by-side combining a first film comprising a first material and a second film comprising a second material;
    forming a composite substrate (CPS) by correspondingly forming a first metal layer (MEL1) and a second metal layer (MEL2) on opposite surfaces of the function enhancement layer (RFL), wherein the composite substrate (CPS) comprises a mixture portion (SLP) comprising the first film and an uncoated portion (BPR) comprising the second film;
    forming an active material layer (ACT1, ACT2) on the mixture portion (SLP) of the composite substrate (CPS); and
    attaching on the uncoated portion (BPR) of the composite substrate (CPS) a tab (TAB) electrically connected to at least one of the first metal layer (MEL1) and the second metal layer (MEL2).

14. The method of claim 13, wherein a welding adhesion of the second film is equal to or greater than 5.3 gf/mm$^2$, determined in accordance with ASTM D-638.

15. The method of claims 13 or 14, wherein an elongation at break of the second film is in a range of 100% to 200%, wherein the elongation at break is determined according to Elongation at break (%) = {(final length - initial length)/initial length} $\times$ 100.

# FIG. 1

ELL

COL1 AML1    30    COL2 AML2
10                   20

# FIG. 2

# FIG. 3

EP 4 734 189 A1

# FIG. 4

# FIG. 5

# FIG. 6

MDP    TBP  ENP2

MES
ACT2
CEL1
30
ACT1
MEL1
CPS  RFL
MEL2
ACT1
CEL2
30
ACT2
MES

ENP1

TAB2

UPP1
EXP      TAB1
UPP2

TAB3

ENP3

D2
↑
⊗——→D1
D3

# FIG. 7

CPS

SLP          BRP

ACT1

ACT1

TAB1

MDP  TBP  MEL2  MEL1
RFL

D2
↑
⊗——→D1
D3

FIG. 8

# FIG. 9

EP 4 734 189 A1

# FIG. 10

EP 4 734 189 A1

CPS

$T_{MEL1}$

$T_{RFL}$

$T_{MEL2}$

$W_{TBP2}$

TBP2

MDP

RFL

$W_{MDP}$

$W_{CPS}$

TBP1

$W_{TBP1}$

MEL2

MEL1

D2

D3

D1

EP 4 734 189 A1

# FIG. 11

# FIG. 12

```
                    ┌──────────┐
                    │  Start   │
                    └────┬─────┘
                         │
                         ▼
┌─────────────────────────────────────────────────┐
│ Combine first film and second film side-by-side  │──S100
└──────────────────────┬──────────────────────────┘
                       │
                       ▼
┌─────────────────────────────────────────────────┐
│  Form first metal layer and second metal layer   │──S200
└──────────────────────┬──────────────────────────┘
                       │
                       ▼
┌─────────────────────────────────────────────────┐
│            Form active material layer            │──S300
└──────────────────────┬──────────────────────────┘
                       │
                       ▼
┌─────────────────────────────────────────────────┐
│                   Attach tab                     │──S400
└──────────────────────┬──────────────────────────┘
                       │
                       ▼
                  ┌──────────┐
                  │   End    │
                  └──────────┘
```

Europäisches
Patentamt

European
Patent Office

Office européen
des brevets

# EUROPEAN SEARCH REPORT

**Application Number**

EP 25 20 7639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 207 268 A (SHANGHAI JUSHENG TECH CO LTD) 2 June 2023 (2023-06-02) * paragraphs [0001], [0002], [0033], [0035], [0038], [0041], [0043], [0044], [0046], [0048], [0049] - [0051], [0054] * * figures 1,3 * | 1-15 | INV. H01M4/66 H01M10/052 H01M50/533 H01M50/536 H01M10/04 |
| X | CN 113 097 494 A (ZHUHAI COSMX BATTERY CO LTD) 9 July 2021 (2021-07-09) * paragraphs [0001], [0002], [0007] - [0012], [0031] - [0035], [0042], [0043], [0045], [0050] - [0052], [0060], [0061], [0090], [0092], [0095] - [0097] * * paragraphs [0118], [0122] - [0124] * * figure 1 * * tables 1,2 * | 1-12 | |
| A | | 13-15 | |
| X | CN 116 247 218 A (SHANGHAI JUSHENG TECH CO LTD) 9 June 2023 (2023-06-09) * paragraphs [0001], [0002], [0011], [0032] - [0034], [0037], [0039], [0050] * * figure 1 * | 1-12 | TECHNICAL FIELDS SEARCHED (IPC) H01M |
| A | | 13-15 | |
| X | WO 2022/242255 A1 (GUANGDONG OPPO MOBILE TELECOMMUNICATIONS CORP LTD [CN]) 24 November 2022 (2022-11-24) * page 1, line 6 - line 20 * * page 5, line 29 - line 31 * * page 6, line 4 - line 10 * * page 7, line 6 - line 7 * * page 7, line 20 - page 8, line 4 * * page 10, line 35 - page 11, line 5 * * figure 5 * * examples 1-6 * | 1-15 | |

-/--

The present search report has been drawn up for all claims

| Place of search | Date of completion of the search | Examiner |
|---|---|---|
| The Hague | 5 March 2026 | Grave, Christian |

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 751 037 A (XIAMEN HITHIUM NEW ENERGY TECHNOLOGY CO LTD) 4 May 2021 (2021-05-04) | 1-12 | |
| A | * paragraphs [0001], [0002], [0047] - [0055], [0064], [0073], [0076] * <br> * figures 3,4 * <br> ----- | 13-15 | |

TECHNICAL FIELDS
SEARCHED (IPC)

The present search report has been drawn up for all claims

| Place of search | Date of completion of the search | Examiner |
|---|---|---|
| The Hague | 5 March 2026 | Grave, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 7639

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2026

| Patent document cited in search report | | Publication date | Patent family member(s) | | Publication date |
|---|---|---|---|---|---|
| CN 116207268 | A | 02-06-2023 | NONE | | |
| CN 113097494 | A | 09-07-2021 | NONE | | |
| CN 116247218 | A | 09-06-2023 | NONE | | |
| WO 2022242255 | A1 | 24-11-2022 | CN | 113314696 A | 27-08-2021 |
| | | | WO | 2022242255 A1 | 24-11-2022 |
| CN 112751037 | A | 04-05-2021 | NONE | | |

EPO FORM P0459

For more details about this annex : see Official Journal of the European Patent Office, No. 12/82

**EP 4 734 189 A1**

**Patent documents cited in the description**

- KR 1020240144539